# EUROPÄISCHE PATENTSCHRIFT

(11) **EP 1 932 607 B1**
(45) Veröffentlichungstag und Bekanntmachung des Hinweises auf die Patenterteilung: **25.02.2009**
(21) Anmeldenummer: 07405307.5
(22) Anmeldetag: 15.10.2007
(51) Int. Cl.: B23B 31/34, B23Q 3/18, B23B 31/20, B23B 31/107

(54) **Werkstückträger zum positionsgenauen Festlegen an einem Spannfutter sowie Spannvorrichtung mit einem Spannfutter und einem positionsgenau daran festspannbaren Werkstückträger**
Workpiece holder for exact positioning on a clamping chuck and clamping device with a chuck and workpiece holder positioned exactly thereon
Support de pièce à usiner destiné à la fixation exacte sur un mandrin ainsi que dispositif à mandrin doté d'un mandrin et d'un support de pièce à usiner fixé fermement et positionné exactement sur celui-ci

(30) Priorität: 14.12.2006 CH 20302006
(43) Veröffentlichungstag der Anmeldung: 18.06.2008
(73) Patentinhaber: Erowa AG, 5734 Reinach (CH)
(72) Erfinder: Sandmeier, Bruno, 5707 Seengen (CH)
(74) Vertreter: Rottmann, Maximilian

(56) Entgegenhaltungen:
- EP-A- 0 900 618
- EP-A1- 0 255 042
- EP-A1- 1 068 919
- EP-A2- 0 970 769
- EP-A9- 1 442 832
- DE-C- 861 948
- US-A- 3 023 015

## Beschreibung

Die vorliegende Erfindung bezieht sich auf einen Werkstückträger zum positionsgenauen Festlegen an einem Spannfutter nach dem Oberbegriff des Anspruchs 1, sowie auf eine Spannvorrichtung mit einem Spannfutter und einem positionsgenau daran festspannbaren Werkstückträger nach dem Oberbegriff des Anspruchs 15. Ein solcher Werkstückträger bzw. eine solche Spannvorrichtung ist aus der DE 861 948 C bekannt.

Derartige Werkstückträger sind grundsätzlich bekannt und dienen vornehmlich dazu, ein zu bearbeitendes Werkstück mittels eines Werkstückträgers mit hoher Präzision an einem an der Bearbeitungsmaschine fixierten Spannfutter einzuspannen. Der Werkstückträger soll dabei nicht nur mit einer hohen absoluten Genauigkeit an dem Spannfutter festgelegt werden können, sondern insbesondere auch mit einer hohen Repetiergenauigkeit. Um den Werkstückträger positionsgenau an dem Spannfutter festlegen zu können, ist dieser üblicherweise mit einem Referenzsystem versehen, das auf das Referenzsystem des Spannfutters abgestimmt ist, d.h. korrespondierend dazu ausgebildet ist. Nach dem Festlegen an dem Spannfutter soll der Werkstückträger zumindest in X- und Y-Richtung eine definierte Soll-Lage einnehmen. Vorzugsweise ist der Werkstückträger nach dem Festlegen an dem Spannfutter jedoch auch in Z-Richtung sowie bezüglich der Winkelausrichtung um die Z-Achse ausgerichtet.

Aus der EP 0 255 042 A1 ist eine Spannvorrichtung für ein Werkzeug für eine Werkzeugmaschine bekannt, die aus einem Spannfutter und einem Werkzeughalter besteht. Das Spannfutter weist zwei aus seiner Unterseite vorstehende Zentrierleistenpaare auf, die mit Anlageflächen zur Ausrichtung des Werkzeughalters in X- und Y-Richtung versehen sind. Ferner sind vier über die Oberfläche des Spannfutters vorstehende Zapfen vorgesehen, die für die Ausrichtung des Werkzeughalters in Z-Richtung verantwortlich sind. Der Werkzeughalter weist eine plane Oberfläche auf, die gegen die Stirnfläche der vorerwähnten Zapfen aufzuliegen bestimmt ist. Ferner sind im Werkzeughalter zwei Paare von auf die Zentrierleisten ausgerichtete Nuten mit zur Anlage an die Leisten vorgesehenen elastischen Lippen vorhanden. Schliesslich ist der Werkzeughalter mit einer Mittelbohrung zur Aufnahme eines Zugbolzens versehen, mit Hilfe dessen die zur lagegerechten Zentrierung des Werkzeughalters erforderliche Spannkraft übertragen wird. Dabei weist das Spannfutter einen zentrisch angeordneten Kugelverschluss auf, der mit diesem Zugbolzen zusammenarbeitet.

Ein Nachteil solcher bekannter Vorrichtungen ist u.a. darin zu sehen, dass das am Werkstückträger festgespannte Werkstück nur auf einer Seite bearbeitet werden kann. Soll das Werkstück beispielsweise auf zwei Seiten bearbeitet werden, so muss es nach dem Bearbeiten der einen Seite vom Werkstückträger gelöst und in der neuen Position, in welcher die andere Seite bearbeitbar ist, wieder daran festgespannt werden. Es versteht sich, dass dies einerseits aufwändig ist und andererseits mit Einbussen bezüglich der Einspanngenauigkeit verbunden ist.

Aus der DE 861 948 C ist ein Wende-Spannfutter zum Befestigen an einer Arbeitsspindel einer Werkzeugmaschine bekannt. Das Spannfutter weist einen mit Spannbacken versehenen Einspannrahmen auf. Der Einspannrahmen ist um zwei Zapfen um 180° verschwenkbar, so dass im Einspannrahmen festgespannte Werkstücke um 180° gewendet werden können. Zur Positionierung des Einspannrahmens gegenüber dem Spindelkopf ist letzterer mit einer Ringrippe versehen, die in eine auf jeder Seite des Einspannrahmens angebrachte Ringnut greift. Zum Fixieren des Einspannrahmens am Spindelkopf ist der Einspannrahmen mit Haltestücken versehen, an denen je ein Schraubenbolzen angreift. Die Schraubenbolzen sind mit einem Mitnehmer verbunden, welcher mittels einer drehbaren und dadurch axial verschiebbaren Büchse zwischen einer Wende- und einer Arbeitsstellung verschiebbar ist. Die Haltestücke weisen zudem je einen Vorsprung auf, der korrespondierend zu einem entsprechenden Rücksprung im Spindelkopf augebildet ist und den Einspannrahmen in der Arbeitsstellung gegen Verdrehung sichern. Obwohl die in die jeweilige Ringnut eingreifende Ringrippe ein Positionieren des Einspannrahmens gegenüber dem Spindelkopf ermöglicht, sind keine Massnahmen getroffen, um den Einspannrahmen in X- und Y- sowie ggf. in Z-Richtung hochpräzise am Spindelkopf festlegen zu können. Durch das Vorsehen von unabhängigen Zentrierelementen, namentlich der in die Rücksprünge eingreifenden Vorsprünge sowie der in die Ringnuten eingreifenden Ringrippe, ist das System zudem überbestimmt. Ausserdem kann das Spannfutter nicht von der Arbeitsspindel gelöst und ggf. andernorts wieder festgespannt werden. Da der Einspannrahmen lediglich mittels zwei Schraubenbolzen festgehalten wird, können auch keine hohen Kräfte, namentlich während des Bearbeitens eines im Einspannrahmen fixierten Werkstücks, aufgenommen werden. Ein weiterer Nachteil besteht darin, dass ein im Einspannrahmen fixiertes Werkstück nur ein gewisse Maximallänge aufweisen darf, damit der Einspannrahmen um 180° gedreht werden kann, ohne dass das Werkstück dazu entfernt werden muss.

Die EP 0 900 618 A1 offenbart ein Halteplatte, die mit zwei abgeflachten Abschnitten versehen ist. An dem rückwärtigen Abschnitt sind zwei einander gegenüberliegende Halter angeordnet, mittels welchen die Halteplatte in zwei unterschiedlichen Position am Spannfutter festgespannt werden kann. Der jeweilige Halter ist gemäss der eingangs beschriebenen EP 0 255 042 A1 ausgebildet und wird mittels eines mittig angeordneten Spannzapfens an dem Spannfutter fixiert.

In der US 3,023,015 ist eine Vorrichtung für elektrische Bohrmaschinen offenbart. Die Vorrichtung besteht aus einer Aufnahme, die ein offenes vorderes Ende und ein geschlossenes hinteres Ende aufweist, wobei am hinteren Ende ein zylindrischer Fortsatz angeformt ist, mittels welchem die Aufnahme im Futter der Bohrmaschine befestigt werden kann. Die Aufnahme dient dem Fixieren von Haltern, in welchen Werkzeuge fixiert werden können. Der Halter ist mit einer zentralen Druchgangsbohrung versehen, in welcher Werkzeuge mittels Schrauben fixierbar sind. Der Halter kann reversibel ausgebildet sein, so dass auf jeder Seite ein Werkzeug darin befestigt werden kann. Der Halter ist beidseitig mit konischen Nuten versehen, in welche an der Aufnahme angeordnete Spannkugeln zum Fixieren des Halters in der Aufnahme eingreifen können.

Schliesslich ist aus der EP 0 970 769 A2 ein Halter für Bohrwerkzeuge bekannt, der mit einer zentralen Durchgangsbohrung versehen ist, die auf jeder Seite ein axiales Einsteckloch zur Aufnahme eines Bohrers bildet. Der Halter ist mit einem radialen Sackloch versehen, das die beiden Einstecklöcher schneidet und der Ausbildung oder der Aufnahme eines Anschlags zum drehsicheren Fixieren des jeweiligen Bohrers dient.

Die Erfindung zielt darauf ab, einen mit einer zentralen Durchgangsöffnung versehenen Werkstückträger gemäss dem Oberbegriff des Anspruchs 1 derart weiterzubilden, dass schnell, einfach, positionsgenau und in unterschiedlichen Lagen an unterschiedlichen Spannfuttern festgelegt werden kann, ohne dass ein zentraler Spannzapfen vorgesehen werden muss, wobei der Werkstückträger einfach aufgebaut sind soll.

Zur Lösung dieser Aufgabe wird nach der Erfindung ein Werkstückträger gemäss dem Anspruch 1 bereitgestellt.

Indem der Werkstückträger mit zwei unabhängigen Referenzsystemen versehen und dem jeweiligen Referenzsystem die zentrale Durchgangsöffnung umgebende, sich im Wesentlichen in Richtung der Längsmittelachse des Werkstückträgers erstreckende Mittel zum Fixieren des Werkstückträgers am Spannfutter zugeordnet sind, wird die grundsätzliche Voraussetzung geschaffen, dass der Werkstückträger auch ohne einen mittigen Spannzapfen schnell, einfach, positionsgenau und sicher an einem Spannfutter fixiert werden kann.

Bevorzugte Weiterbildungen des Werkstückträgers sind in den abhängigen Ansprüchen 2 bis 14 definiert.

Eine weitere Aufgabe der Erfindung besteht darin, eine Spannvorrichtung mit einem Spannfutter und einem positionsgenau daran festspannbaren Werkstückträger vorzuschlagen, welch letzterer in zwei unterschiedlichen Lagen positionsgenau an dem Spannfutter festgelegt werden kann.

Zur Lösung dieser Aufgabe wird nach der Erfindung eine Spannvorrichtung gemäss dem Anspruch 15 bereitgestellt.

Bevorzugte Weiterbildungen der Spannvorrichtung sind in den abhängigen Ansprüchen 16 bis 24 definiert.

Nachfolgend wird ein bevorzugtes Ausführungsbeispiel der Erfindung anhand von Zeichnungen näher erläutert. Dabei zeigt:
- Fig. 1: eine perspektivische Ansicht des Werkstückträgers von der einen Seite;
- Fig. 2: eine perspektivische Ansicht des Werkstückträgers von der anderen Seite;
- Fig. 3: einen Längsschnitt durch den Werkstückträger zusammen mit einem darin festgespannten Werkstück;
- Fig. 4: einen Längsschnitt durch ein Spannfutter und den daran festgelegten Werkstückträger;
- Fig. 5: einen Längsschnitt durch den am Spannfutter festgelegten Werkstückträger.

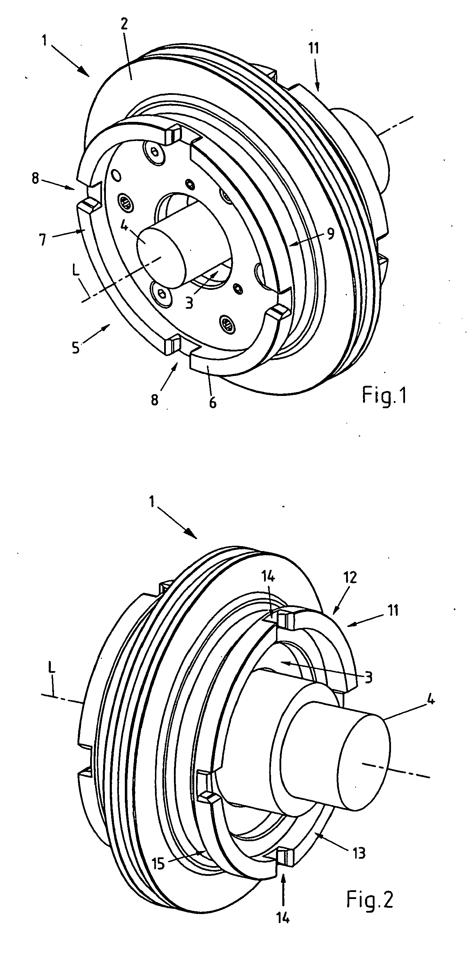

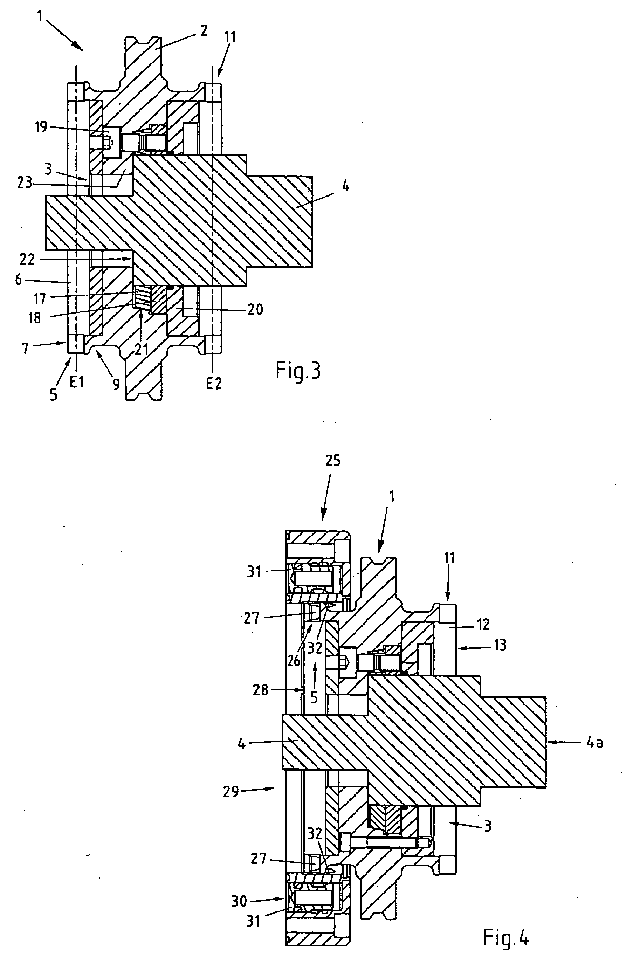

Die Fig. 1 zeigt den Werkstückträger 1 zusammen mit einem darin eingespannten Werkstück 4 in einer perspektivischen Ansicht von der einen Stirnseite. Der Werkstückträger 1 weist einen runden Grundkörper 2 auf, der mit einer zentralen Durchgangsöffnung 3 versehen ist, deren Durchmesser sich stufenweise verändert. Der Werkstückträger 1 ist mit zwei einander gegenüberliegenden Referenzsystemen 5, 11 versehen, wobei aus dieser Darstellung insbesondere ein erstes Referenzsystem 5 ersichtlich ist. Diesem ersten Referenzsystem 5 ist ein kreisringförmig ausgebildeter Vorsprung 6 zugeordnet, der sich in Richtung der Längsmittelachse L des Werkstückträgers 1 erstreckt. Die Längsmittelachse L bildet gleichzeitig auch die Z-Achse des Werkstückträgers 1. In die Stirnfläche 7 dieses Vorsprungs 6 sind Zentrierelemente in Form von vier Zentriernuten 8 eingelassen, wodurch die Zentrierelemente 8 gleichmässig verteilt um die zentrale Durchgangsöffnung 3 herum angeordnet sind. Diese Zentriernuten 8 dienen dem Positionieren des Werkstückträgers 1 in X- und in Y-Richtung wie auch bezüglich der Winkellage um die Z-Achse. Die plane Stirnfläche 7 des ringförmigen Vorsprungs 6 dient gleichzeitig als Z-Auflage beim Festspannen des Werkstückträgers 1 an einem Spannfutter. Wie ersichtlich, wird der eine Endbereich der zentralen Durchgangsöffnung 3 radial von diesem ersten Referenzsystem 5 umschlossen. Auf der der Stirnfläche 7 gegenüberliegenden Rückseite weist der Vorsprung 6 eine auf der Aussenseite ringförmig umlaufende Schulter 9 auf, welche als Spannfläche dient. An dieser Schulter 9 können am Spannfutter angeordnete Spannkugeln angreifen, wie nachfolgend anhand der Figur 4 noch näher erläutert wird.

Jedenfalls sind an diesem die Durchgangsöffnung 3 koaxial umgebenden Vorsprung 6 sowohl die Zentrierelemente 8 zum Positionieren des Werkstückträgers 1 in X- und in Y-Richtung wie auch die Auflageflächen 7 zum Abstützen des Werkstückträgers in Z-Richtung wie auch die als Spannfläche für am Spannfutter angeordnete Spannelemente dienende Schulter 9 angeordnet. Somit sind mehrere, unterschiedlichen Funktionen dienende Elemente in diesem Vorsprung 6 vereinigt, wobei die Zentrierelemente 8 in der Form von Nuten 8 wie auch die als Z-Auflage dienenden Auflageflächen 7 das jeweilige Referenzsystem 5 bilden, während die die Spannfläche bildende Schulter 9 direkt dem genannten Referenzsystem 5 zugeordnet ist. Ein solcher Werkstückträger 1 ist besonders einfach aufgebaut.

Im vorliegenden Beispiel ist der Werkstückträger 1 rotationssysmmetrisch ausgebildet, wodurch er sich insbesondere auch für den Einsatz auf Drehmaschinen eignet. Anstelle von Nuten könnten auch andere Zentrierelemente wie beispielsweise Zentrierzapfen vorgesehen werden.

In der Fig. 2 ist der Werkstückträger 1 in einer perspektivischen Ansicht von der anderen Seite ersichtlich. Dabei ist das zweite Referenzsystem 11 ersichtlich ist, dem ebenfalls ein kreisringförmig ausgebildeten Vorsprung 12 zugeordnet ist, in dessen Stirnfläche 13 Zentrierelemente in Form von vier Zentriernuten 14 eingelassen sind. Dieser Vorsprung 12 umschliesst den anderen Endbereich der zentralen Durchgangsöffnung 3. Die Stirnfläche 13 dieses ringförmigen Vorsprungs 12 dient wiederum gleichzeitig als Z-Auflage beim Festspannen des Werkstückträgers 1 an einem Spannfutter. Auf der der Stirnfläche 13 gegenüberliegenden Rückseite weist der Vorsprung 12 eine ringförmig umlaufende, als Spannfläche dienende Schulter 15 auf. Dieses zweite Referenzsystem 11 umschliesst den anderen Endbereich der zentralen Durchgangsöffnung 3 radial.

Die Fig. 3 zeigt einen Längsschnitt durch den Werkstückträger 1 zusammen mit eine daran festgespannten Werkstück 4. Im Innern des Werkstückträgers 1 bzw. des Grundkörpers 2 sind Mittel zum Fixieren und Positionieren des Werkstücks angeordnet. Diese Mittel umfassen im vorliegenden Beispiel einen geschlitzten Spannring 17, eine Druckplatte 18 sowie mehrere Spannschrauben, wobei aus dieser Darstellung nur eine Spannschraube 19 ersichtlich ist. Der nach dem Spannzangenprinzip funktionierende Spannring 17 wird beim Festziehen der Spannschrauben 19 durch die Druckplatte 18 in Richtung des ersten Referenzsystems 5, im vorliegenden Beispiel also nach links, gedrückt. Da der Spannring 17 radial von einer sich konisch in Richtung des ersten Referenzsystems 5 verjüngenden Druckfläche 21 umgeben ist, wird der Spannring 17 durch die Druckplatte 18 radial nach innen gedrückt, wodurch das Werkstück 4 entlang seines Umfangs festgeklemmt und damit auch positioniert wird. In Z-Richtung legt sich das Werkstück 4 mit seiner ringförmigen Stirnfläche 22 an einem Vorsprung 23 des Grundkörpers 2 an. Beim Festziehen der Spannschrauben 19 wird das Werkstück 1 durch den Spannring 17 in Richtung dieses Vorsprungs 23 gedrückt und sichergestellt, dass das Werkstück 4 in Z-Richtung mit seiner ringförmigen Stirnfläche 22 an dem Vorsprung 23 des Grundkörpers 2 zur Anlage kommt und damit in Z-Richtung positioniert ist.

Aus der Darstellung gemäss Fig. 3 ist insbesondere auch die auf der Rückseite des Vorsprungs 6 angeordnete Schulter 9 ersichtlich, welche eine Spannfläche für die am Spannfutter angeordnete Spannkugeln bildet.

Im Gegensatz zu einem Wende-Spannfutter wird der erfindungsgemäss ausgebildete Werkstückträger 1 lösbar am Spannfutter fixiert, d.h. er kann jederzeit vom Spannfutter entfernt und ggf. andernorts an einem Spannfutter fixiert werden. Dies ist insbesodnere dann von grossem Vorteil, wenn das im Werkstückträger eingespannte Werkstück auf unterschiedlichen Maschinen bearbeitet werden soll, da in diesem Fall das Werkstück nicht aus dem Werkstückträger entnommen werden muss.

Im vorliegenden Beispiels sind die beiden Referenzsysteme 5, 11 in parallel zueinander verlaufenden Ebenen E1, E2 angeordnet. Ggf. könnten die Referenzsysteme jedoch auch unter einem Winkel zueinander verlaufen.

Anstelle der beschriebenen Ringspannvorrichtung könnte beispielsweise auch eine Spannzange vorgesehen werden. Natürlich sind auch andere Spannvorrichtungen denkbar, wobei beispielsweise auch ein Befestigen des Werkstücks mittels Schrauben möglich ist.

Fig. 4 zeigt einen Längsschnitt durch ein Spannfutter 25 und den Werkstückträger 1, welcher mittels des ersten Referenzsystems 5 am Spannfutter 25 festgelegt ist. Das Spannfutter 25 ist ebenfalls mit einem Referenzsystem 26 versehen, welches mit den beiden Referenzsystemen 5, 11 des Werkstückträgers 1 korrespondiert. Das Referenzsystem 26 des Spannfutters 25 umfasst vier Zentrierzapfen 27 sowie mehrere, als Z-Anschläge für den Werkstückträger 1 dienende Anschlagflächen 28, an welchen sich der Werkstückträger 1 mit der jeweiligen Stirnfläche 7 des ringförmigen Vorsprungs 6 anlegen kann. Insgesamt sind vier, kreisringabschnittförmig gestaltete Anschlagflächen vorgesehen, welche sich jeweils zwischen zwei benachbarten Zentrierzapfen 27 erstrecken. Allerdings sind aus der Darstellung gemäss Fig. 4 nur eine Anschlagfläche 28 sowie zwei Zentrierzapfen 27 ersichtlich. Das Spannfutter 25 weist zudem eine zentrale Öffnung 29 sowie einen Kugelspannmechanismus 30 auf, der zumindest einen Betätigungskolben 31 sowie eine Vielzahl von Spannkugeln 32 umfasst. Der Betätigungskolben 31 ist im vorliegenden Beispiel kreisringförmig ausgebildet und wird hydraulisch oder pneumatisch betätigt. Die Zentrierzapfen 27 korrespondieren in der Form und Lage mit den Zentriernuten 8 des Werkstückträgers 1 (Fig. 1).

Beim Festspannen des Werkstückträgers 1 am Spannfutter 25 werden die Spannkugeln 32 von dem Betätigungskolben 31 radial nach innen gedrückt, so dass sich die Spannkugeln an der Schulter 9 (Fig. 3) des Werkstückträgers 1 anlegen und diesen in Z-Richtung gegen das Spannfutter 25 ziehen. Der Kugelspannmechanismus 30 funktioniert grundsätzlich wie in der EP 1 068 919 A1 umschrieben. Beim Aufsetzen des Werkstückträgers 1 auf das Spannfutter 25 dringen die Zentrierzapfen 27 des Spannfutters 25 in die Zentriernuten 8 des Werkstückträgers 1 ein, wodurch der Werkstückträger 1 gegenüber dem Spannfutter in X- und Y-Richtung sowie bezüglich der Winkellage um die Z-Achse ausgerichtet wird. Nach dem Aufsetzen des Werkstückträgers 1 auf das Spannfutter 25 verbleibt zwischen der Z-Auflage des Spannfutters und derjenigen des Werkstückträgers 1 ein Spalt von wenigen hunderstel Millimetern. Dieser Spalt wird beim Festspannen des Werkstückträgers 1 aufgehoben, indem die Zentrierzapfen weiter in die Zentriernuten eindringen. Beim Eindringen der Zentrierzapfen in die Zentriernuten macht man sich Materialelastizität im Bereich der Zentriernuten und/oder der Zentrierzapfen zu Nutze. Dadurch kann auf federelastische nachgiebige Zentrierelemente, wie sie beispielsweise aus der eingangs erwähnten Druckschrift EP 0 255 042 A1 bekannt sind, verzichtet werden. Nach dem Festspannen ist der Werkstückträger 1 auch in Z-Richtung gegenüber dem Spannfutter 25 positioniert und die zentrale Öffnung 29 des Spannfutters 25 verläuft koaxial zur Durchgangsöffnung 3 im Werkstückträger 1. Indem auch das Spannfutter 25 mit einer zentralen Öffnung 29 versehen ist, kann sich das am Werkstückträger 1 fixierte Werkstück 4 in diese Öffnung 29 hinein erstrecken.

In dieser Aufspannung kann die eine Seite des Werkstücks 4 bearbeitet werden. Beispielsweise kann die Stirnfläche 4a des Werkstücks 4 mittels Schleifen bearbeitet werden.

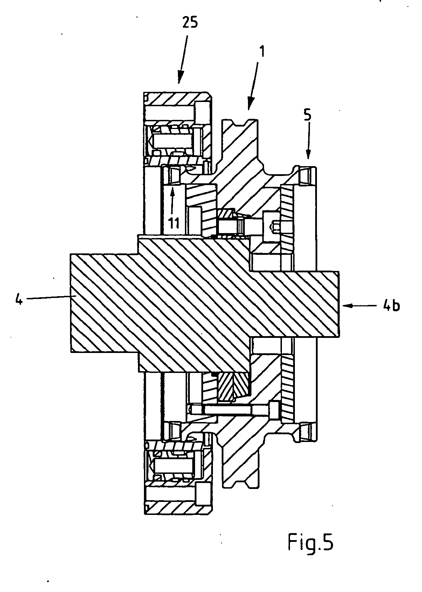

Die Figur 5 zeigt einen weiteren Längsschnitt durch das Spannfutter 25 und den daran festgespannten Werkstückträger 1. Der Werkstückträger 1 wurde gegenüber der Fig. 4 um 180° gedreht und ist mittels des zweiten Referenzsystems 11 in der vorgängig beschriebenen Art am Spannfutter fixiert. In dieser Aufspannung kann nun die andere Seite des Werkstücks 4 bearbeitet werden. Beispielsweise kann die Stirnfläche 4b des Werkstücks 4 mittels Schleifen bearbeitet werden, so dass danach beide Stirnflächen 4a, 4b des Werkstücks 4 planparallel verlaufen.

Indem die Spannkugeln des Spannfutters direkt an dem dem jeweiligen Referenzsystem zugeordneten Vorsprung 6 bzw. 12 des Werkstückträgers angreifen, kann auf separate Spannelemente am Werkstückträger 1 wie beispielsweise Spannzapfen oder dergleichen verzichtet werden, was eine besonders wirtschaftliche Herstellung des Werkstückträgers begünstigt. Da der Vorsprung 6, 12 die zentrale Durchgangsöffnung 3 umgibt und mit einer umlaufenden Schulter 9, 15 versehen ist, können die am Spannfutter 25 angeordneten Spannelemente 32 an einer vergleichsweise grossen Fläche angreifen und den Werkstückträger 1 sicher und ggf. mit hohen Kräften am Spannfutter 25 fixieren. Das Vorsehen eines zentralen Spannzapfens oder Einzugsbolzens, wie dies bei herkömmlichen Werkstückträgern üblich ist, ist durch die zentrale Durchgangsbohrung ohnehin nicht möglich. Zudem begünstigt diese Ausbildung, dass der Werkstückträger hochpräzise am Spannfutter fixiert werden kann.

Es versteht sich, dass anstelle eines einzigen, kreisringförmig ausgebildeten Vorsprungs auch mehrere Vorsprünge, beispielsweise drei oder vier kreisringabschnittförmig gestaltete Vorspünge, vorgesehen werden könnten, ohne dass sich dadurch an dem grundlegenden Erfindungsgedanken etwas ändern würde.

## Patentansprüche

1. Werkstückträger (1) mit einer zentralen Durchgangsöffnung (3) zur Aufnahme eines Werkstücks (4) sowie zwei mit Zentrierelementen (8, 14) versehenen Referenzsystemen (5, 11) zum positionsgenauen Festlegen des Werkstückträgers (4) in unterschiedlichen Positionen an einem Spannfutter, **dadurch gekennzeichnet, dass** der Werkstückträgers (1) lösbar am Spannfutter fixierbar ist und zwei unabhängige Referenzsysteme (5, 11) aufweist, wobei dem jeweiligen Referenzsystem (5, 11) die zentrale Durchgangsöffnung (3) umgebende, sich im Wesentlichen in Richtung der Längsmittelachse (L) des Werkstückträgers (1) erstreckende Mittel zum Fixieren des Werkstückträgers (1) am Spannfutter zugeordnet sind.

2. Werkstückträger (1) nach Anspruch 1, **dadurch gekennzeichnet, dass** die genannten Mittel einen oder mehrere die Durchgangsöffnung (3) jeweils umgebende(n) Vorsprung/Vorsprünge (6, 12) beinhalten, wobei der jeweilige Vorsprung (6, 12) mit einer eine Spannfläche bildenden Schulter (9, 15) versehen ist, an welcher am Spannfutter angeordnete Spannelemente anzugreifen bestimmt sind.

3. Werkstückträger (1) nach Anspruch 2, **dadurch gekennzeichnet, dass** die dem Positionieren des Werkstückträgers (1) am Spannfutter dienenden Zentrierelemente (8, 14) gleichmässig verteilt um die zentrale Durchgangsöffnung (3) herum angeordnet sind.

4. Werkstückträger (1) nach Anspruch 2 und 3, **dadurch gekennzeichnet, dass** die Zentrierelemente (8, 14) an dem Vorsprung (6, 12) angeordnet sind.

5. Werkstückträger (1) nach einem der Ansprüche 2 bis 4, **dadurch gekennzeichnet, dass** der Vorsprung (6, 12) kreisringförmig ausgebildet und koaxial zur Durchgangsöffnung (3) angeordnet ist.

6. Werkstückträger (1) nach einem der Ansprüche 2 bis 5, **dadurch gekennzeichnet, dass** der Vorsprung (6, 12) auf der Aussenseite mit der die Spannfläche bildenden Schulter (9, 15) versehen ist.

7. Werkstückträger (1) nach einem der Ansprüche 2 bis 6, **dadurch gekennzeichnet, dass** der jeweilige Vorsprung (6, 12) zumindest abschnittweise mit einer planen, als Z-Auflage für den Werkstückträger (1) dienenden Stirnfläche (7, 13) versehen ist.

8. Werkstückträger (1) nach Anspruch 7, **dadurch gekennzeichnet, dass** die als Spannfläche dienende Schulter (9, 15) auf der Rückseite der jeweiligen Stirnfläche (7, 13) ausgebildet ist.

9. Werkstückträger (1) nach einem der vorhergehenden Ansprüche, **dadurch gekennzeichnet, dass** pro Referenzsystem (5, 11) zumindest drei Zentrierelemente in der Form von Zentriernuten (8, 14) oder Zentrierzapfen vorgesehen sind, mittels welchen der Werkstückträger in X- und in Y-Richtung positionierbar ist.

10. Werkstückträger (1) nach einem der vorhergehenden Ansprüche, **dadurch gekennzeichnet, dass** in der Durchgangsöffnung (3) Mittel (17, 18, 19) zum Fixieren und/oder Positionieren des Werkstücks (4) angeordnet sind.

11. Werkstückträger (1) nach einem der vorhergehenden Ansprüche, **dadurch gekennzeichnet, dass** die beiden Referenzsysteme (5, 11) einander gegenüberliegen und in parallel zueinander verlaufenden Ebenen (E1, E2) angeordnet sind.

12. Werkstückträger (1) nach einem der Ansprüche 1 bis 10, **dadurch gekennzeichnet, dass** die beiden Referenzsysteme in Ebenen angeordnet sind, die unter einem Winkel zueinander verlaufen.

13. Werkstückträger (1) nach einem der vorhergehenden Ansprüche, **dadurch gekennzeichnet, dass** der Werkstückträger (1) rotationssysmmetrisch ausgebildet ist.

14. Werkstückträger (1) nach Anspruch 1, **dadurch gekennzeichnet, dass** die Mittel des jeweiligen Referenzsystems (5, 11) einen die Durchgangsöffnung (3) koaxial umgebenden Vorsprung (6, 12) umfassen, an dem sowohl Zentrierelemente (8, 14) zum Positionieren des Werkstückträgers (1) in X- und in Y-Richtung wie auch Auflageflächen (7, 13) zum Abstützen des Werkstückträgers in Z-Richtung wie auch eine als Spannfläche für am Spannfutter angeordnete Spannelemente dienende Schulter (9, 15) angeordnet sind.

15. Spannvorrichtung mit einem Spannfutter (25) und einem daran festspannbaren Werkstückträger (1), wobei der Werkstückträger (1) mit zwei Referenzsystemen (5, 11) zum positionsgenauen Festlegen in unterschiedlichen Lagen an einem korrespondierenden Referenzsystem des Spannfutters (25) versehen ist, und wobei der Werkstückträger (1) eine zentrale Durchgangsöffnung (3) zur Aufnahme eines Werkstücks (4) aufweist, **dadurch gekennzeichnet, dass** der Werkstückträger (1) lösbar am Spannfutter (25) fixierbar ist und zwei unabhängige Referenzsysteme (5, 11) aufweist, wobei dem jeweiligen Referenzsystem (5, 11) die zentrale Durchgangsöffnung (3) umgebende, sich im Wesentlichen in Richtung der Längsmittelachse (L) des We.rkstückträgers (1) erstreckende und mit einer Spannfläche versehene Mittel zugeordnet sind, an welcher am Spannfutter (25) angeordnete Spannelemente (32) anzugreifen bestimmt sind.

16. Spannvorrichtung nach Anspruch 15, **dadurch gekennzeichnet, dass** die genannten Mittel einen oder mehrere die Durchgangsöffnung (3) umgebenden VorsprungNorsprünge (6, 12) beinhalten, wobei der jeweilige Vorsprung (6, 12) mit einer die Spannfläche bildenden Schulter (9, 15) versehen ist.

17. Spannvorrichtung nach Anspruch 15 oder 16, **dadurch gekennzeichnet, dass** der Vorsprung (6, 12) auf der Aussenseite mit der die Spannfläche bildenden Schulter (9, 15) versehen ist.

18. Spannvorrichtung nach einem der Ansprüche 15 bis 17, **dadurch gekennzeichnet, dass** die dem Positionieren des Werkstückträgers (1) am Spannfutter (25) dienenden ersten Zentrierelemente (8, 14) entlang eines die zentrale Durchgangsöffnung (3) koaxial umgebenden Kreisrings angeordnet sind und das Spannfutter (25) mit zu den ersten Zentrierlementen (8, 14) korrespondierenden weiteren Zentrierelementen (27) versehen ist.

19. Spannvorrichtung nach einem der Ansprüche 15 bis 18, **dadurch gekennzeichnet, dass** von der Stirnseite des jeweiligen Vorsprungs (6, 12) zumindest drei Zentrierelemente in der Form Zentrierzapfen vorstehen oder dass in die Stirnseite des jeweiligen Vorsprungs (6, 12) zumindest drei Zentrierelemente in der Form von Zentriernuten (8, 14) eingelassen sind.

20. Spannvorrichtung nach einem der Ansprüche 16 bis 19, **dadurch gekennzeichnet, dass** die Stirnfläche (7, 13) des jeweiligen Vorsprungs (6, 12) als Z-Auflage ausgebildet ist, an welcher sich der Werkstückträger (1) beim Festspannen am Spannfutter (25) in Z-Richtung abstützt.

21. Spannvorrichtung nach einem der Ansprüche 15 bis 20, **dadurch gekennzeichnet, dass** das Spannfutter (25) mit einer zentralen Öffnung (29) versehen ist, in welche sich ein am Werkstückträger (1) fixiertes Werkstück (4) erstrecken kann.

22. Spannvorrichtung nach Anspruch 21, **dadurch gekennzeichnet, dass** die zentrale Öffnung (29) des Spannfutters (25) koaxial zur Durchgangsöffnung (3) im Werkstückträger (1) verläuft, wenn der Werkstückträger (1) am Spannfutter (25) festgelegt ist.

23. Spannvorrichtung nach einem der Ansprüche 15 bis 22, **dadurch gekennzeichnet, dass** die beiden Referenzsysteme (5, 11) des Werkstückträgers (1) in parallel zueinander verlaufenden Ebenen (E1, E2) angeordnet sind.

24. Spannvorrichtung nach einem der Ansprüche 15 bis 23, **dadurch gekennzeichnet, dass** die beiden Referenzsysteme des Werkstückträgers (1) in Ebenen angeordnet sind, die unter einem Winkel zueinander verlaufen.

## Claims

1. Workpiece holder (1) having a central through-opening (3) for accommodating a workpiece (4) and two reference systems (5, 11), provided with centring elements (8, 14), for accurately locating the workpiece holder (1) in different positions on a chuck, **characterized in that** the workpiece holder (1) can be detachably fixed to the chuck and has two independent reference systems (5, 11), wherein means for fixing the workpiece holder (1) to the chuck are assigned to the respective reference system (5, 11), said means surrounding the central through-opening (3) and extending essentially in the direction of the longitudinal centre axis (L) of the workpiece holder (1).

2. Workpiece holder (1) according to Claim 1, **characterized in that** said means contain one or more projections (6, 12) respectively surrounding the through-opening (3), the respective projection (6, 12) being provided with a shoulder (9, 15) which forms a clamping surface and on which clamping elements arranged on the chuck are intended to act.

3. Workpiece holder (1) according to Claim 2, **characterized in that** the centring elements (8, 14) serving to position the workpiece holder (1) on the chuck are arranged in a uniformly distributed manner around the central through-opening (3).

4. Workpiece holder (1) according to Claims 2 and 3, **characterized in that** the centring elements (8, 14) are arranged on the projection (6, 12).

5. Workpiece holder (1) according to one of Claims 2 to 4, **characterized in that** the projection (6, 12) is of annular design and is arranged coaxially to the through-opening (3).

6. Workpiece holder (1) according to one of Claims 2 to 5, **characterized in that** the outer side of the projection (6, 12) is provided with the shoulder (9, 15) forming the clamping surface.

7. Workpiece holder (1) according to one of Claims 2 to 6, **characterized in that** the respective projection (6, 12) is provided, at least in sections, with a flat end face (7, 13) serving as a Z seating for the workpiece holder (1).

8. Workpiece holder (1) according to Claim 7, **characterized in that** the shoulder (9, 15) serving as clamping surface is formed on the rear side of the respective end face (7, 13).

9. Workpiece holder (1) according to one of the preceding claims, **characterized in that** at least three centring elements in the form of centring slots (8, 14) or centring pins are provided per reference system (5, 11), by means of which centring elements the workpiece holder can be positioned in the X and Y directions.

10. Workpiece holder (1) according to one of the preceding claims, **characterized in that** means (17, 18, 19) for fixing and/or positioning the workpiece (4) are arranged in the through-opening (3).

11. Workpiece holder (1) according to one of the preceding claims, **characterized in that** the two reference systems (5, 11) lie opposite one another and are arranged in planes (E1, E2) running parallel to one another.

12. Workpiece holder (1) according to one of Claims 1 to 10, **characterized in that** the two reference systems are arranged in planes which run at an angle to one another.

13. Workpiece holder (1) according to one of the preceding claims, **characterized in that** the workpiece holder (1) is of rotationally symmetrical design.

14. Workpiece holder (1) according to Claim 1, **characterized in that** the means of the respective reference system (5, 11) comprise a projection (6, 12) which coaxially surrounds the through-opening (3) and on which the centring elements (8, 14) for positioning the workpiece holder (1) in the X and Y directions and also seating surfaces (7, 13) for supporting the workpiece holder in the Z direction and also a shoulder (9, 15) serving as clamping surface for clamping elements arranged on the chuck are arranged.

15. Clamping device having a chuck (25) and a workpiece holder (1) which can be clamped thereon, wherein the workpiece holder (1) is provided with two reference systems (5, 11) for accurately locating it in different positions on a corresponding reference system of the chuck (25), and wherein the workpiece holder (1) has a central through-opening (3) for accommodating a workpiece (4), **characterized in that** the workpiece holder (1) can be fixed detachably to the chuck (25) and has two independent reference systems (5, 11), means which surround the central through-opening (3), extend essentially in the direction of the longitudinal centre axis (L) of the workpiece holder (1) and are provided with a clamping surface and on which clamping elements (32) arranged on the chuck (25) are intended to act being assigned to the respective reference system (5, 11).

16. Clamping device according to Claim 15, **characterized in that** said means contain one or more projections (6, 12) surrounding the through-opening (3), the respective projection (6, 12) being provided with a shoulder (9, 15) which forms the clamping surface.

17. Clamping device according to Claim 15 or 16, **characterized in that** the outer side of the projection (6, 12) is provided with the shoulder (9, 15) forming the clamping surface.

18. Clamping device according to one of Claims 15 to 17, **characterized in that** the centring elements (8, 14) serving to position the workpiece holder (1) on the chuck (25) are arranged along an annulus coaxially surrounding the central through-opening (3), and the chuck (25) is provided with further centring elements (27) corresponding to the first centring elements (8, 14).

19. Clamping device according to one of Claims 15 to 18, **characterized in that** at least three centring elements in the form of centring pins project from the end face of the respective projection (6, 12), or **in that** at least three centring elements in the form of centring slots (8, 14) are incorporated in the end face of the respective projection (6, 12).

20. Clamping device according to one of Claims 16 to 19, **characterized in that** the end face (7, 13) of the respective projection (6, 12) is designed as a Z seating, on which the workpiece holder (1) is supported in the Z direction when being clamped on the chuck (25).

21. Clamping device according to one of Claims 15 to 20, **characterized in that** the chuck (25) is provided with a central opening (29), into which a workpiece (4) fixed to the workpiece holder (1) can extend.

22. Clamping device according to Claim 21, **characterized in that** the central opening (29) of the chuck (25) runs coaxially to the through-opening (3) in the workpiece holder (1) when the workpiece holder (1) is located on the chuck (25).

23. Clamping device according to one of Claims 15 to 22, **characterized in that** the two reference systems (5, 11) of the workpiece holder (1) are arranged in planes (E1, E2) running parallel to one another.

24. Clamping device according to one of Claims 15 to 23, **characterized in that** the two reference systems of the workpiece holder (1) are arranged in planes which run at an angle to one another.

## Revendications

1. Support de pièce à usiner (1) avec une ouverture de passage (3) centrale pour la réception d'une pièce à usiner (4) ainsi que deux systèmes de référence (5, 11) pourvus d'éléments de centrage (8, 14) pour la fixation en position exacte du support de pièce à usiner (4) dans différentes positions sur un mandrin de serrage, **caractérisé en ce que** le support de pièce à usiner (1) peut être fixé de manière amovible sur le mandrin de serrage et présente deux systèmes de référence (5, 11) indépendants, dans lequel à chaque système de référence (5, 11) étant associés des moyens entourant l'ouverture de passage (3) centrale, s'étendant essentiellement en direction de l'axe médian longitudinal (L) du support de pièce à usiner (1) pour la fixation du support de pièce à usiner (1) sur le mandrin de serrage.

2. Support de pièce à usiner (1) selon la revendication 1, **caractérisé en ce que** les moyens cités contiennent une ou plusieurs saillies (6, 12) entourant respectivement l'ouverture de passage (3), dans lequel la saillie (6, 12) respective est pourvue d'un épaulement (9, 15) formant une surface de serrage, sur laquelle des éléments de serrage disposés sur le mandrin de serrage sont destinés à agir.

3. Support de pièce à usiner (1) selon la revendication 2, **caractérisé en ce que** les éléments de centrage (8, 14) servant au positionnement du support de pièce à usiner (1) sur le mandrin de serrage sont disposés répartis régulièrement autour de l'ouverture de passage (3) centrale.

4. Support de pièce à usiner (1) selon la revendication 2 ou 3, **caractérisé en ce que** les éléments de centrage (8, 14) sont disposés sur la saillie (6, 12).

5. Support de pièce à usiner (1) selon l'une quelconque des revendications 2 à 4, **caractérisé en ce que** la saillie (6, 12) est réalisée en forme de couronne et est disposée coaxialement à l'ouverture de passage (3).

6. Support de pièce à usiner (1) selon l'une quelconque des revendications 2 à 5, **caractérisé en ce que** la saillie (6, 12) est pourvue sur le côté extérieur de l'épaulement (9, 15) formant la surface de serrage.

7. Support de pièce à usiner (1) selon l'une quelconque des revendications 2 à 6, **caractérisé en ce que** la saillie (6, 12) respective est pourvue au moins par endroits d'une surface frontale (7, 13) plane, servant d'appui en Z pour le support de pièce à usiner (1).

8. Support de pièce à usiner (1) selon la revendication 7, **caractérisé en ce que** l'épaulement (9, 15) servant de surface de serrage est réalisé sur le côté arrière de la surface frontale (7, 13) respective.

9. Support de pièce à usiner (1) selon l'une quelconque des revendications précédentes, **caractérisé en ce que** par système de référence (5, 11) sont prévus au moins trois éléments de centrage sous la forme de rainures de centrage (8, 14) ou tenons de centrage, au moyen desquels le support de pièce à usiner peut être positionné dans le sens X et Y.

10. Support de pièce à usiner (1) selon l'une quelconque des revendications précédentes, **caractérisé en ce que** des moyens (17, 18, 19) pour la fixation et/ou le positionnement de la pièce à usiner (4) sont disposés dans l'ouverture de passage (3).

11. Support de pièce à usiner (1) selon l'une quelconque des revendications précédentes, **caractérisé en ce que** les deux systèmes de référence (5, 11) sont disposés dans des plans (E1, E2) opposés et s'étendant parallèlement l'un à l'autre.

12. Support de pièce à usiner (1) selon l'une quelconque des revendications 1 à 10, **caractérisé en ce que** les deux systèmes de référence sont disposés dans des plans qui s'étendent dans un angle l'un par rapport à l'autre.

13. Support de pièce à usiner (1) selon l'une quelconque des revendications précédentes, **caractérisé en ce que** le support de pièce à usiner (1) est réalisé à symétrie de révolution.

14. Support de pièce à usiner (1) selon la revendication 1, **caractérisé en ce que** les moyens de chaque système de référence (5, 11) comprennent une saillie (6, 12) entourant coaxialement l'ouverture de passage (3), sur laquelle sont disposés des éléments de centrage (8, 14) pour le positionnement du support de pièce à usiner (1) dans le sens X et Y ainsi que des surfaces d'appui (7, 13) pour l'appui du support de pièce à usiner dans le sens Z ainsi qu'un épaulement (9, 15) servant de surface de serrage pour des éléments de serrage disposés sur le mandrin de serrage.

15. Dispositif de serrage avec un mandrin de serrage (25) et un support de pièce à usiner (1) pouvant être bloqué par serrage dessus, dans lequel le support de pièce à usiner (1) est pourvu de deux systèmes de référence (5, 11) pour la fixation en position exacte dans différentes positions sur un système de référence correspondant du mandrin de serrage (25) et dans lequel le support de pièce à usiner (1) présente une ouverture de passage (3) centrale pour la réception d'une pièce à usiner (4), **caractérisé en ce que** le support de pièce à usiner (1) peut être fixé de manière amovible sur le mandrin de serrage (25) et présente deux systèmes de référence (5, 11) indépendants, dans lequel à chaque système de référence (5, 11) sont associés des moyens entourant l'ouverture de passage (3) centrale, s'étendant essentiellement en direction de l'axe médian longitudinal (L) du support de pièce à usiner (1) et pourvus d'une surface de serrage, sur laquelle des éléments de serrage (32) disposés sur le mandrin de serrage (25) sont destinés à agir.

16. Dispositif de serrage selon la revendication 15, **caractérisé en ce que** les moyens cités contiennent une ou plusieurs saillies (6, 12) entourant l'ouverture de passage (3), dans lequel la saillie (6, 12) respective est pourvue d'un épaulement (9, 15) formant la surface de serrage.

17. Dispositif de serrage selon la revendication 15 ou 16, **caractérisé en ce que** la saillie (6, 12) est pourvue sur le côté extérieur de l'épaulement (9, 15) formant la surface de serrage.

18. Dispositif de serrage selon l'une quelconque des revendications 15 à 17, **caractérisé en ce que** les premiers éléments de centrage (8, 14) servant au positionnement du support de pièce à usiner (1) sur le mandrin de serrage (25) sont disposés le long d'une couronne entourant coaxialement l'ouverture de passage (3) centrale et le mandrin de serrage (25) est pourvu d'autres éléments de centrage (27) correspondant aux premiers éléments de centrage (8, 14).

19. Dispositif de serrage selon l'une quelconque des revendications 15 à 18, **caractérisé en ce qu'**au moins trois éléments de centrage sous la forme de tenon de centrage dépassent du côté frontal de chaque saillie (6, 12) ou **en ce que** dans le côté frontal de chaque saillie (6, 12) sont emboîtés au moins trois éléments de centrage sous la forme de rainures de centrage (8 14).

20. Dispositif de serrage selon l'une quelconque des revendications 16 à 19, **caractérisé en ce que** la face frontale (7, 13) de chaque saillie (6, 12) est réalisée comme un appui en Z, sur lequel s'appuie le support de pièce à usiner (1) lors du blocage par serrage sur le mandrin de serrage (25) dans le sens Z.

21. Dispositif de serrage selon l'une quelconque des revendications 15 à 20, **caractérisé en ce que** le mandrin de serrage (25) est pourvu d'une ouverture (29) centrale, dans laquelle peut s'étendre une pièce à usiner (4) fixée sur le support de pièce à usiner (1).

22. Dispositif de serrage selon la revendication 21, **caractérisé en ce que** l'ouverture (29) centrale du mandrin de serrage (25) s'étend coaxialement à l'ouverture de passage (3) dans le support de pièce à usiner (1), lorsque le support de pièce à usiner (1) est fixé sur le mandrin de serrage (25).

23. Dispositif de serrage selon l'une quelconque des revendications 15 à 22, **caractérisé en ce que** les deux systèmes de référence (5, 11) du support de pièce à usiner (1) sont disposés dans des plans (E1, E2) s'étendant parallèlement l'un à l'autre.

24. Dispositif de serrage selon l'une quelconque des revendications 15 à 23, **caractérisé en ce que** les deux systèmes de référence de la pièce à usiner (1) sont disposés dans des plans qui s'étendent dans un angle l'un par rapport à l'autre.
